# EUROPÄISCHE PATENTSCHRIFT

(11) **EP 3 705 267 B1**
(45) Veröffentlichungstag und Bekanntmachung des Hinweises auf die Patenterteilung: **28.04.2021**
(21) Anmeldenummer: 19161573.1
(22) Anmeldetag: 08.03.2019
(51) Int. Cl.: B29C 64/165, B29C 64/205, B33Y 30/00

(54) **DRUCKKOPF-BESCHICHTER-MODUL FÜR EINEN 3D-DRUCKER, VERWENDUNG DES DRUCKKOPF-BESCHICHTER-MODULS UND 3D-DRUCKER MIT DEM DRUCKKOPF-BESCHICHTER-MODUL**
PRINT HEAD COATER MODULE FOR A 3D PRINTER, USE OF THE PRINT HEAD COATER MODULE AND 3D PRINTER USING THE PRINT HEAD COATER MODULE
MODULE DE COUCHEUSE / TÊTE D'IMPRESSION POUR UNE IMPRIMANTE TRIDIMENSIONNELLE, UTILISATION DU MODULE DE COUCHEUSE / TÊTE D'IMPRESSION ET IMPRIMANTE TRIDIMENSIONNELLE POURVU DE MODULE DE COUCHEUSE / TÊTE D'IMPRESSION

(43) Veröffentlichungstag der Anmeldung: 09.09.2020
(73) Patentinhaber: ExOne GmbH, 86368 Gersthofen (DE)
(72) Erfinder: LADEWIG, Roland, 24340 Windeby (DE); FISCHER, Michael, 85229 Markt Indersdorf (DE); HUBER, Thomas, 86551 Aichach (DE)
(74) Vertreter: Viering, Jentschura & Partner mbB Patent- und Rechtsanwälte

(56) Entgegenhaltungen:
- WO-A1-2017/152897
- US-A1- 2001 050 448
- US-A1- 2018 304 357

## Beschreibung

Die vorliegende Erfindung betrifft ein Druckkopf-Beschichter-Modul für einen 3D-Drucker, die Verwendung des Druckkopf-Beschichter-Moduls und einen 3D-Drucker mit dem Druckkopf-Beschichter-Modul.

US 2018/304357 A1 offenbart ein Druckkopf-Beschichter-Modul gemäß dem Oberbegriff von Anspruch 1. US 2001/050448 A1 offenbart ein Druckkopf-Beschichter-Modul mit einem Behälter, einem Druckkopf und einer Walze, die zwischen dem Behälter und dem Druckkopf angeordnet ist.

Es sind verschiedene generative Fertigungsverfahren (und folglich verschiedene Arten von 3D-Druckern, also Maschinen/Anlagen zum schichtweisen Aufbau eines Bauteils) bekannt.

Einige generative Fertigungsverfahren haben die folgenden Schritte gemeinsam:
(1) Es wird zunächst Partikelmaterial (bzw. partikelförmiges Baumaterial) vollflächig/durchgängig auf ein Baufeld aufgebracht, um eine Schicht aus nicht-verfestigtem Partikelmaterial zu bilden.
(2) Die aufgebrachte Schicht aus nicht-verfestigtem Partikelmaterial wird in einem vorbestimmten Teilbereich (entsprechend dem zu fertigenden Bauteil) selektiv verfestigt, zum Beispiel durch selektives Aufdrucken von Behandlungsmittel, zum Beispiel Bindemittel, (alternativ zum Beispiel durch Lasersintern).
(3) Die Schritte (1) und (2) werden wiederholt, um ein gewünschtes Bauteil zu fertigen. Hierzu kann zum Beispiel eine Bauplattform, auf der das Bauteil schichtweise aufgebaut wird, jeweils um eine Schichtdicke abgesenkt werden, bevor eine neue Schicht aufgetragen wird (alternativ können zum Beispiel der Beschichter und die Druckvorrichtung jeweils um eine Schichtdicke angehoben werden).
(4) Schließlich kann das gefertigte Bauteil, das aus den verfestigten Teilbereichen gebildet ist und von losem, nicht-verfestigtem Partikelmaterial gestützt und umgeben ist, entpackt werden.

Der Bauraum, in dem das oder die Bauteile gefertigt werden, kann zum Beispiel von einer sogenannten Baubox (auch "Jobbox" genannt) definiert oder gebildet sein. Eine solche Baubox kann eine nach oben hin offene, sich in vertikaler Richtung erstreckende Umfangswandstruktur haben (zum Beispiel gebildet von vier vertikalen Seitenwänden), die zum Beispiel in der Draufsicht rechteckig ausgebildet sein kann. In der Baubox kann eine höhenverstellbare Bauplattform aufgenommen sein. Der Raum über der Bauplattform und zwischen der vertikalen Umfangswandstruktur kann dabei den Bauraum zum Beispiel zumindest mitausbilden. Ein Beispiel für eine solche Baubox ist zum Beispiel in DE 10 2009 056 696 A1 beschrieben. Der Bauraum kann aber zum Beispiel auch seitlich (zumindest teilweise) frei, das heißt, umfangsseitig (zumindest teilweise) unbegrenzt sein. Ein oberer Bereich des Bauraums kann zum Beispiel als Baufeld bezeichnet werden.

In dem obigen Schritt (1) kommt in der Regel ein Beschichter (auch "Recoater" genannt) zum Einsatz. Es sind unterschiedliche Beschichter zur Verwendung in einem 3D-Drucker bekannt, mit denen ein partikelförmiges Baumaterial in Form einer gleichmäßigen, vollflächigen/durchgängigen Schicht auf das Baufeld (auch Baufläche oder Baubereich genannt) aufgebracht werden kann.

Eine Art von Beschichter verwendet eine Walze (kurz "Walzen-Beschichter"), vor der vor dem Beschichten zunächst eine Menge an partikelförmigem Baumaterial abgelegt wird und die anschließend horizontal über das Baufeld hinweg verfahren wird, um das partikelförmige Baumaterial in Form einer gleichmäßigen Schicht auf das Baufeld aufzubringen. Die Walze kann dabei in Gegenlaufrichtung rotiert werden.

Eine andere Art von Beschichter (sog. "Behälter-Beschichter", zum Beispiel "Schlitz-Beschichter") verwendet einen Behälter, der einen inneren Hohlraum zur Aufnahme von Partikelmaterial definiert, und hat einen (zum Beispiel langgestreckten) Ausgabebereich, zum Beispiel aufweisend einen (zum Beispiel langestreckten) Ausgabeschlitz, zum Ausgeben des partikelförmigen Baumaterials. Der Behälter-Beschichter kann zum Beispiel über ein Baufeld oder Bauraum hinweg verfahrbar sein (zum Beispiel horizontal, zum Beispiel quer zu seiner Längsrichtung), wobei das Partikelmaterial durch den (langgestreckten) Ausgabebereich auf das Baufeld ausgebbar ist, um dadurch eine gleichmäßige, vollflächige/durchgängige Baumaterial-Schicht auf das Baufeld aufzubringen. Der Beschichter kann zum Beispiel langgestreckt sein, um die Länge oder Breite eines (rechteckigen) Baufelds oder Bauraums zu überspannen bzw. abzudecken. Der Beschichter kann zum Beispiel mit einem Streichelement versehen sein, mit welchem auf das Baufeld aufgebrachtes Baumaterial überstrichen werden kann, um das Baumaterial zu verdichten und/oder zu nivellieren.

In dem obigen Schritt (2) kann zum Beispiel eine Druckvorrichtung mit einem Druckkopf zum Einsatz kommen, der auf einen Teilbereich der zuvor aufgebrachten

Partikelmaterial-Schicht gesteuert ein Behandlungsmittel aufbringt. Das Behandlungsmittel trägt zu einer (unmittelbaren und/oder späteren) Verfestigung der Partikelmaterial-Schicht in dem Teilbereich bei. Zum Beispiel kann das Behandlungsmittel ein Bindemittel sein/enthalten, zum Beispiel eine Bindemittel-Komponente eines Mehrkomponenten-Bindemittels.

Alternativ kann in dem obigen Schritt (2) zum Beispiel ein Laser eingesetzt werden, um einen Teilbereich der zuvor aufgebrachten Baumaterial-Schicht zu verfestigen, insbesondere durch Sintern oder Schmelzen des Baumaterials in dem Teilbereich.

Es gibt verschiedene Ansätze, um den Durchsatz von 3D gedruckten Bauteilen bzw. 3D-Druckern zu erhöhen. DE 10 2014 112 447 A1 schlägt dazu einen 3D-Drucker mit zwei Bauräumen vor, denen jeweils ein Beschichter zugeordnet ist und die von einem gemeinsamen Druckkopf bedient werden. Alternativ dazu könnten in zwei separaten 3D-Druckern mit jeweils einem Bauraum, dem ein Beschichter und ein Druckkopf zugeordnet ist, gleichzeitig/parallel die gewünschten Bauteile gedruckt werden.

Es kann als eine Aufgabe der Erfindung angesehen werden, einen 3D-Drucker und/oder eine Vorrichtung dafür bereitzustellen, mit denen effektiv qualitativ hochwertige Bauteile herstellbar sind.

Dazu stellt die vorliegende Erfindung ein Druckkopf-Beschichter-Modul für einen 3D-Drucker nach Anspruch 1, die Verwendung eines Druckkopf-Beschichter-Moduls nach Anspruch 8 und einen 3D-Drucker nach Anspruch 9 bereit. Weitere Ausgestaltungen des Druckkopf-Beschichter-Moduls sind in den abhängigen Ansprüchen 2-7 beschreiben. Weitere Ausgestaltungen des 3D-Druckers sind in den abhängigen Ansprüchen 10-12 beschrieben.

Gemäß verschiedenen Aspekten der Erfindung hat ein Druckkopf-Beschichter-Modul für einen 3D-Drucker einen Druckkopf, einen Beschichter mit einem Behälter, der einen inneren Hohlraum zur Aufnahme von Partikelmaterial (zum Beispiel Sandpartikel, zum Beispiel Metallpartikel, zum Beispiel Kunststoffpartikel) definiert und der in einer Ausgabeöffnung mündet, aus der das Partikelmaterial (zum Beispiel auf ein/das Baufeld des 3D-Druckers, zum Beispiel in Richtung eines/des Bauraums des 3D Druckers, zum Beispiel kontinuierlich während einer Fahrt über einen/den Bauraum des 3D Druckers) ausgebbar ist (zum Beispiel mittels eines Dosiermechanismus, zum Beispiel aufweisend eine Dosierwalze und/oder eine Ultraschallvorrichtung und/oder eine Rüttelvorrichtung), und einer Walzenanordnung, die zwischen dem Behälter und dem Druckkopf angeordnet ist, und eine gemeinsame (zum Beispiel rahmenförmige) Trägerstruktur, an der der Druckkopf, der Behälter und die Walzenanordnung angebracht sind, so dass der Druckkopf, der Behälter und die Walzenanordnung gemeinsam über einen Bauraum des 3D-Druckers verfahrbar sind.

Die Anordnung von Druckkopf und Beschichter in einem Modul ermöglicht es, dass mehrere hintereinander angeordnete Bauräume nacheinander von sowohl dem gleichen Druckkopf als auch dem gleichen Beschichter bedient werden. Da jeder Bauraum von dem gleichen Beschichter und dem gleichen Druckkopf bedient wird, kann eine gleichmäßige Qualität der 3D gedruckten Bauteile in den verschiedenen Bauräumen erreicht werden, so dass letztendlich qualitativ hochwertige Bauteile fertigbar sind bzw. Ausschuss oder aufwendige Einstellarbeiten reduziert werden oder entfallen können. Gegenüber den eingangs beschriebenen Ansätzen, um den Durchsatz von 3D gedruckten Bauteilen bzw. 3D-Druckern zu erhöhen, können zudem ein oder mehrere Beschichter eingespart werden, die ansonsten/bislang einem jeweiligen Bauraum zugeordnet sind. Schließlich kann durch die Verwendung eines solchen Beschichters in dem Modul, der einen Behälter und eine Walzenanordnung aufweist (anstelle zum Beispiel eines Beschichters mit einem Behälter und einer Streichklinge), die Beschichtungsgeschwindigkeit erhöht werden, welche anderenfalls einen limitierenden Faktor für die Geschwindigkeit des Druckkopf-Beschichter-Moduls darstellen würde. Die Walzenanordnung kann somit einen mit der Kombination in ein Modul anderenfalls einhergehenden Geschwindigkeitsverlust beim Drucken zumindest zu einem gewissen Grad kompensieren. Dabei kann der Behälter primär die Funktion des Ausgebens einer gesteuerten Menge übernehmen, wobei die Walzenanordnung die Funktion des (feinen) Verteilens und des Verdichtens übernehmen kann, das heißt, besagte Funktionen können voneinander getrennt werden.

Der Druckkopf, der Behälter, die Ausgabeöffnung und/oder die Walzenanordnung können zum Beispiel langgestreckt sein. Die Ausgabeöffnung kann zum Beispiel an einer dem Bauraum zugewandten Seite des Beschichters angeordnet sein. Der Behälter kann zum Beispiel eine Schließvorrichtung aufweisen, zum Beispiel um die Ausgabeöffnung (dicht und/oder vollständig) zu verschließen, zum Beispiel so dass kein Partikelmaterial aus der Ausgabeöffnung ausgegeben wird.

Die Walzenanordnung weist eine erste Walze und eine zweite Walze auf. Die erste Walze ist zwischen dem Behälter und der zweiten Walze angeordnet. Die zweite Walze ist zwischen der ersten Walze und dem Druckkopf angeordnet. Die erste Walze und/oder die zweite Walze können zum Beispiel langgestreckt sein. Die erste Walze kann zum Beispiel eine Verteilerwalze sein. Die erste Walze kann zum Beispiel eingerichtet sein, um aus dem Behälter ausgegebenes Partikelmaterial zu verteilen, zum Beispiel (gleichmäßig) über das Baufeld (das heißt, über einen/den oberen Bereich des Bauraums) zu verteilen. Die zweite Walze kann zum Beispiel eine Verdichterwalze sein. Die zweite Walze kann zum Beispiel eingerichtet sein, um aus dem Behälter ausgegebenes (und von der ersten Walze verteiltes) Partikelmaterial zu verdichten, zum Beispiel gleichmäßig, zum Beispiel auf einen vorgegebenen Verdichtungsgrad.

Durch die Verwendung einer ersten Walze und einer zweiten Walze in der Walzenanordnung kann die Beschichtungsgeschwindigkeit (weiter) erhöht werden. Die erste Walze kann aus dem Behälter ausgegebenes Partikelmaterial (gleichmäßig) über das Baufeld (das heißt, den oberen Bereich des Bauraums) verteilen und die zweite Walze kann das von der ersten Walze verteilte Partikelmaterial (zu einem gewünschten Verdichtungsgrad) verdichtet. Das heißt, die erste Walze kann die Funktion des Verteilens des Partikelmaterials übernehmen und die zweite Walze kann die Funktion des Verdichtens des Partikelmaterials übernehmen. Die besagten Funktionen können also voneinander getrennt werden, wodurch die Beschichtungsgeschwindigkeit erhöht werden kann.

Die erste Walze kann zum Beispiel eine strukturierte Oberfläche aufweisen. Die strukturierte Oberfläche der ersten Walze kann zum Beispiel ein oder mehrere Vertiefungen aufweisen. Die strukturierte Oberfläche der ersten Walze kann zum Beispiel ein oder mehrere Erhebungen aufweisen. Die Vertiefungen und/oder Erhebungen können zum Beispiel geformt werden, indem Material von einem Teil einer/der Oberfläche einer/der Walze abgetragen wird und/oder indem Material auf einen Teil einer/der Oberfläche einer/der Walze aufgebracht wird.

Durch die Strukturierung der Oberfläche der ersten Walze kann das aus dem Behälter ausgegebene Partikelmaterial besonders gut verteilt werden. Durch die Strukturierung der Oberfläche der ersten Walze kann eine besonders gleichmäßige Verteilung des Partikelmaterials über das Baufeld erreicht werden.

Die Struktur der Oberfläche der ersten Walze kann zum Beispiel mindestens eine (zum Beispiel längliche, zum Beispiel durch Vertiefungen und/oder Erhebungen gebildete) Nut aufweisen, zum Beispiel eine Mehrzahl von Nuten, zum Beispiel 2-40 Nuten, zum Beispiel 2-30 Nuten, zum Beispiel 2-20 Nuten, zum Beispiel 2-10 Nuten. Die mindestens eine Nut kann zum Beispiel geneigt sein gegenüber der Walzenlängsachse, zum Beispiel in der Form einer Helix, die sich um eine/die Walzenlängsachse windet. Die mindestens eine Nut kann zum Beispiel die oben genannte(n) Vertiefung(en) formen.

Die Struktur der Oberfläche der ersten Walze kann zum Beispiel eine (zum Beispiel durch Vertiefungen und/oder Erhebungen gebildete) Wabenstruktur aufweisen, zum Beispiel eine rautenförmige Wabenstruktur.

Die zweite Walze kann zum Beispiel eine glatte Oberfläche aufweisen. Die Oberfläche der zweiten Walze kann zum Beispiel eine Rauheit Rz (gemittelte Rautiefe) kleiner/gleich 250 µm haben, zum Beispiel kleiner/gleich 200 µm, zum Beispiel kleiner/gleich 150 µm, zum Beispiel kleiner/gleich 100 µm, zum Beispiel kleiner/gleich 75 µm, zum Beispiel kleiner/gleich 50 µm, zum Beispiel kleiner/gleich 25 µm, zum Beispiel kleiner/gleich 10 µm, zum Beispiel kleiner/gleich 5 µm, zum Beispiel kleiner/gleich 1 µm, zum Beispiel kleiner/gleich 0,5 µm, zum Beispiel kleiner/gleich 0,1 µm, zum Beispiel kleiner/gleich 0,01 µm. Die Oberfläche der zweiten Walze kann zum Beispiel beschichtet sein. Die Beschichtung kann zum Beispiel aus Teflon, Hartmetall, Keramik und/oder Kombinationen davon gemacht sein. Die Oberfläche der zweiten Walze kann zum Beispiel geschliffen, poliert, geglättet und/oder geläppt sein.

Durch die glatte Oberfläche der zweiten Walze kann das Partikelmaterial besonders gut verdichtet werden. Durch die glatte Oberfläche der zweiten Walze kann das Partikelmaterial besonders gleichmäßig verdichtet werden.

Die erste Walze und/oder die zweite Walze können zum Beispiel eine Hohlwalze sein. Die erste Walze und/oder die zweite Walze können zum Beispiel aus Metall, Kunststoff, Stahl, Edelstahl, Aluminium, Titan, glasfaserverstärktem Kunststoff (GFK), kohlefaserverstärktem Kunststoff (CFK) und/oder Kombinationen davon gemacht sein. Die erste Walze und/oder die zweite Walze können zum Beispiel einen Durchmesser im Bereich von 5-500 mm haben, zum Beispiel im Bereich von 10-400 mm, zum Beispiel im Bereich von 20-300 mm, zum Beispiel im Bereich von 30-200 mm.

Die zweite Walze kann zum Beispiel gegenüber der Trägerstruktur höhenverstellbar (zum Beispiel in z-Richtung verstellbar, zum Beispiel in Vertikalrichtung verstellbar) sein. Die Höhenverstellung kann zum Beispiel manuell oder mittels eines in das Druckkopf-Beschichter-Modul integrierten Hubantriebs erfolgen. Das Druckkopf-Beschichter-Modul kann zum Beispiel eine Steuervorrichtung haben, die dazu eingerichtet ist, den Hubantrieb zu steuern, zum Beispiel so dass die zweite Walze in Höhenrichtung (zum Beispiel in z-Richtung, zum Beispiel in Vertikalrichtung) gegenüber der Trägerstruktur verstellbar ist.

Die Walzenlängsachse der ersten Walze und die Walzenlängsachse der zweiten Walze können zum Beispiel (im Wesentlichen) parallel zueinander sein.

Das Druckkopf-Beschichter-Modul kann zum Beispiel einen in das Druckkopf-Beschichter-Modul integrierten, eigenen Trägerstruktur-Antrieb zum Bewegen der Trägerstruktur entlang eines Schienensystems aufweisen. Der Trägerstruktur-Antrieb kann zum Beispiel ein Elektromotor sein, der an der Trägerstruktur angeordnete Räder oder andere Abtriebsmittel antreibt. Das Druckkopf-Beschichter-Modul kann zum Beispiel eine/die Steuervorrichtung haben, die dazu eingerichtet ist, den Trägerstruktur-Antrieb zu steuern, zum Beispiel so dass die Trägerstruktur bzw. das Druckkopf-Beschichter-Modul entlang eines/des Schienensystem bewegbar ist.

Das Druckkopf-Beschichter-Modul kann zum Beispiel einen integrierten erste-Walze-Drehantrieb zum Drehbewegen der ersten Walze aufweisen. Der erste-Walze-Drehantrieb kann die erste Walze zum Beispiel in einer Drehrichtung entgegen der Bewegungsrichtung der Trägerstruktur bzw. des Druckkopf-Beschichter-Moduls drehbewegen. Der erste-Walze-Drehantrieb kann die erste Walze zum Beispiel in Gegenlaufrichtung drehbewegen. Das Druckkopf-Beschichter-Modul kann zum Beispiel eine/die Steuervorrichtung haben, die dazu eingerichtet ist, den erste-Walze-Drehantrieb zu steuern, zum Beispiel so dass die erste Walze in einer Drehrichtung entgegen der Bewegungsrichtung der Trägerstruktur bzw. des Druckkopf-Beschichter-Moduls drehbewegbar ist, zum Beispiel so dass die erste Walze in Gegenlaufrichtung drehbewegbar ist.

Unter einer Drehbewegung in eine Drehrichtung entgegen der Bewegungsrichtung der Trägerstruktur bzw. unter einer Drehbewegung in Gegenlaufrichtung wird eine Drehbewegung verstanden, die entgegen einer Drehrichtung ist, in die sich eine frei drehende Walze drehen würde, wenn das Druckkopf-Beschichter-Modul über eine Fläche verfahren wird.

Das Druckkopf-Beschichter-Modul kann zum Beispiel einen integrierten zweite-Walze-Drehantrieb zum Drehbewegen der zweiten Walze aufweisen. Der zweite-Walze-Drehantrieb kann die zweite Walze zum Beispiel in einer Drehrichtung entgegen und/oder in Richtung der Bewegungsrichtung der Trägerstruktur bzw. des Druckkopf-Beschichter-Moduls drehbewegen. Der zweite-Walze-Drehantrieb kann die zweite Walze zum Beispiel in Gegenlaufrichtung und/oder in Laufrichtung drehbewegen. Das Druckkopf-Beschichter-Modul kann zum Beispiel eine/die Steuervorrichtung haben, die dazu eingerichtet ist, den zweite-Walze-Drehantrieb zu steuern, zum Beispiel so dass die zweite Walze in einer Drehrichtung entgegen und/oder in Richtung der Bewegungsrichtung der Trägerstruktur bzw. des Druckkopf-Beschichter-Moduls drehbewegbar ist, zum Beispiel so dass die zweite Walze in Gegenlaufrichtung und/oder Laufrichtung drehbewegbar ist.

Unter einer Drehbewegung in eine Drehrichtung in Richtung der Bewegungsrichtung der Trägerstruktur bzw. unter einer Drehbewegung in Laufrichtung wird eine Drehbewegung verstanden, die einer Drehrichtung entspricht, in die sich eine frei drehende Walze drehen würde, wenn das Druckkopf-Beschichter-Modul über eine Fläche verfahren wird.

Wenn die zweite Walze in einer Drehrichtung in Richtung der Bewegungsrichtung der Trägerstruktur bzw. in Laufrichtung drehbewegt wird, kann das Partikelmaterial besonders gut verdichtet werden.

Das Druckkopf-Beschichter-Modul kann zum Beispiel einen integrierten zweite-Walze-Hubantrieb zum Höhenverstellen (zum Beispiel in z-Richtung Verstellen, zum Beispiel in Vertikalrichtung Verstellen) der zweiten Walze (gegenüber der Trägerstruktur) aufweisen. Das Druckkopf-Beschichter-Modul kann zum Beispiel eine/die Steuervorrichtung haben, die dazu eingerichtet ist, den Hubantrieb zu steuern, zum Beispiel so dass die zweite Walze in Höhenrichtung (zum Beispiel in z-Richtung, zum Beispiel in Vertikalrichtung) (gegenüber der Trägerstruktur) verstellbar ist.

Der Druckkopf und/oder der Behälter und/oder die Walzenanordnung können zum Beispiel in horizontaler Ebene (zum Beispiel in x-Richtung und y-Richtung, zum Beispiel in x/y-Ebene) jeweils unbeweglich (zum Beispiel starr) an der Trägerstruktur angebracht sein. Das heißt, der Druckkopf und/oder der Behälter und/oder die Walzenanordnung können zum Beispiel an der Trägerstruktur angeordnet sein, so dass sie in Horizontalrichtung nicht bewegbar (zum Beispiel verschiebbar) sind.

Der Druckkopf kann zum Beispiel eingerichtet sein, um auf einen Teilbereich einer zuvor von dem Beschichter aufgebrachten Partikelmaterial-Schicht gesteuert ein Behandlungsmittel (zum Beispiel ein Binder, zum Beispiel ein Bindemittel) aufzubringen. Das Behandlungsmittel kann zum Beispiel zu einer (unmittelbaren und/oder späteren) Verfestigung der Partikelmaterial-Schicht in dem Teilbereich beitragen. Zum Beispiel kann das Behandlungsmittel ein Bindemittel sein/enthalten, zum Beispiel eine Bindemittel-Komponente eines Mehrkomponenten-Bindemittels. Der Druckkopf kann zum Beispiel ein Binder-Jetting Druckkopf sein.

Der Druckkopf und/oder der Behälter können zum Beispiel (in Längsrichtung) segmentierbar sein. Das heißt, der Druckkopf und/oder der Behälter können zum Beispiel aus mehreren Segmenten bestehen, die zum Beispiel in Längsrichtung hintereinander angeordnet sind. Der Behälter kann zum Beispiel eine/die Schließvorrichtung aufweisen. Die Schließvorrichtung kann zum Beispiel (in Längsrichtung) segmentierbar sein. Das heißt, die Schließvorrichtung kann zum Beispiel aus mehreren (Schließ-)Segmenten bestehen, zum Beispiel die dazu eingerichtet sind, um einen Teilbereich der Ausgabeöffnung (dicht) zu verschließen.

Das Druckkopf-Beschichter-Modul kann zum Beispiel ein bidirektional ausgebildetes Druckkopf-Beschichter-Modul sein, das dazu eingerichtet ist, in zwei Fahrtrichtungen zu beschichten und/oder zu drucken. Das bidirektional ausgebildete Druckkopf-Beschichter-Modul kann zum Beispiel einen Druckkopf und zwei Beschichter mit jeweils einem Behälter und einer Walzenanordnung aufweisen, wobei zum Beispiel der Druckkopf zwischen den beiden Walzenanordnungen angeordnet sein kann, und der Druckkopf und die beiden Walzenanordnungen zwischen den beiden Behältern angeordnet sein kann, wobei zum Beispiel jede Walzenanordnung eine erste Walze und eine zweite Walze aufweisen kann, wobei zum Beispiel der Druckkopf zwischen den beiden zweiten Walzen angeordnet sein kann, der Druckkopf und die beiden zweiten Walzen zwischen den beiden ersten Walzen angeordnet sein kann, und der Druckkopf, die beiden ersten Walzen und die beiden zweiten Walzen zwischen den beiden Behältern angeordnet sein kann. Das bidirektional ausgebildete Druckkopf-Beschichter-Modul kann zum Beispiel mit zwei Druckköpfen, einem Behälter und zwei Walzenanordnungen ausgebildet sein, wobei zum Beispiel der Behälter zwischen den beiden Walzenanordnungen angeordnet sein kann, und der Behälter und die beiden Walzenanordnungen zwischen den beiden Druckköpfen angeordnet sein kann, wobei zum Beispiel jede Walzenanordnung eine erste Walze und eine zweite Walze aufweisen kann, wobei zum Beispiel der Behälter zwischen den beiden ersten Walzen angeordnet sein kann, der Behälter und die beiden ersten Walzen zwischen den beiden zweiten Walzen angeordnet sein kann, und der Behälter, die beiden ersten Walzen und die beiden zweiten Walzen zwischen den beiden Druckköpfen angeordnet sein kann. Die Elemente/Bauteile (zum Beispiel Druckkopf und/oder Beschichter und/oder Behälter und/oder Walzenanordnung und/oder Trägerstruktur und/oder erste Walze(n) und/oder zweite Walze(n)) des bidirektional ausgebildeten Druckkopf-Beschichter-Moduls können zum Beispiel wie oben beschrieben ausgebildet sein.

Das Druckkopf-Beschichter-Modul kann zum Beispiel zum schichtweisen Auftragen und selektiven Bedrucken von Schichten aus Sand, zum Beispiel Gießereisand, verwendet werden. Das Druckkopf-Beschichter-Modul kann zum Beispiel zum 3D-Drucken von Gießformen und/oder Gießkernen verwendet werden. Das Druckkopf-Beschichter-Modul kann zum Beispiel zum kollektiven schichtweisen Auftragen und selektiven Bedrucken von Partikelmaterial in mehreren in Reihe angeordneten Baufeldern, zum Beispiel gebildet durch eine jeweilige Bauplattform, welche zum Beispiel in einer jeweiligen Baubox aufgenommen ist, verwendet werden.

Gemäß verschiedenen Aspekten der Erfindung hat ein 3D-Drucker ein Druckkopf-Beschichter-Modul nach einem der oben beschriebenen Aspekte, eine Mehrzahl von Bauräumen die hintereinander in Reihe angeordnet sind, und ein Schienensystem, entlang dem das Druckkopf-Beschichter-Modul über die Mehrzahl von Bauräumen hinweg verfahrbar ist.

Die Bauräume können zum Beispiel ein jeweils längliches Baufeld (zum Beispiel rechteckiges Baufeld) definieren und derart hintereinander in Reihe angeordnet sein, dass die Baufelder mit ihren Längsachsen hintereinander bzw. in Verlängerung zueinander ausgerichtet sind, zum Beispiel ohne Abstand, zum Beispiel direkt hintereinander. Die Längsachsen der Baufelder können zum Beispiel deckungsgleich sein. Das Schienensystem kann zum Beispiel ein oder mehrere Schienen (zum Beispiel zwei Schienen) aufweisen, deren Längsachsen sich zum Beispiel (im Wesentlichen) parallel zu den Längsachsen der Baufelder erstrecken. Das Druckkopf-Beschichter-Modul kann zum Beispiel (zum Beispiel entlang der ein oder mehreren Schienen) in eine Richtung verfahrbar sein, die (im Wesentlichen) parallel ist zu den Längsachsen der Baufelder.

Die Bauräume können zum Beispiel in der Draufsicht zwei lange Seiten und zwei kurze Seiten haben und können zum Beispiel entlang einer jeweiligen kurzen Seite benachbart zueinander angeordnet sein, zum Beispiel ohne Abstand, zum Beispiel direkt nebeneinander. Das Schienensystem kann zum Beispiel ein oder mehrere Schienen (zum Beispiel zwei Schienen) aufweisen, deren Längsachsen sich zum Beispiel (im Wesentlichen) parallel zu den langen Seiten der Bauräume erstrecken. Das Druckkopf-Beschichter-Modul kann zum Beispiel (zum Beispiel entlang der ein oder mehreren Schienen) in eine Richtung verfahrbar sein, die (im Wesentlichen) parallel ist zu den langen Seiten der Bauräume.

Die Anordnung der Bauräume ermöglicht es, dass die Längen der Komponenten (wie zum Beispiel Druckkopf und/oder Walzenanordnung) des Druckkopf-Beschichter-Moduls verringert werden können. Das heißt, es können zum Beispiel kürzere Walzen(anordnungen) und/oder kürzere Druckköpfe verwendet werden. Dadurch ist es möglich, eine Durchbiegung der Walzen(anordnung) zu verringern, wodurch die Qualität der 3D gedruckten Bauteile verbessert ist. Außerdem kann ein Druckkopf geringerer Länge verwendet werden, was kostengünstiger ist.

Ein Bauraum kann zum Beispiel durch eine Baubox gebildet sein. Eine Baubox kann zum Beispiel eine höhenverstellbare Bauplattform haben. Eine Baubox kann zum Beispiel Seitenwände haben. Die Bauräume können zum Beispiel derart benachbart zueinander angeordnet sein, dass zwei benachbarte Bauboxen eine gemeinsame Seitenwand haben. Die gemeinsame Seitenwand kann zum Beispiel entfernbar sein, so dass zwei benachbarte Bauräume zu einem größeren Bauraum verbindbar sind. Die gemeinsame Seitenwand kann zum Beispiel eine Trennwand zwischen zwei (benachbarten) Bauräumen bilden. Die Bauplattformen der jeweiligen Bauräume können zum Beispiel unabhängig voneinander höhenverstellbar sein.

Der 3D-Drucker kann zum Beispiel eine Kanalstruktur (zum Beispiel in der Form einer Rinne) aufweisen, die unterhalb der Mehrzahl von Bauboxen verläuft. Die Bauboxen können zum Beispiel eingerichtet sein, um loses Partikelmaterial nach unten hin in die Kanalstruktur abzuführen. Die Kanalstruktur kann zum Beispiel geneigt sein und/oder eine Partikelmaterialbeförderungsvorrichtung (zum Beispiel ein Förderband) aufweisen.

Der 3D-Drucker kann zum Beispiel eine erste und eine zweite Wendevorrichtung aufweisen, die an einem/dem ersten bzw. einem/dem zweiten Längsende der Reihe von Bauräumen (bzw. Bauboxen) angeordnet ist und eingerichtet ist, um das Druckkopf-Beschichter-Modul zu wenden, so dass das Druckkopf-Beschichter-Modul nach einer ersten Fahrt über die Bauräume (bzw. Bauboxen) für eine zweite Fahrt über die Bauräume (bzw. Bauboxen) in umgekehrter Richtung bereitsteht. Die Wendevorrichtung kann zum Beispiel ein Drehteller oder eine Drehscheibe sein.

Der 3D-Drucker und/oder das Druckkopf-Beschichter-Modul kann zum Beispiel eine/die Steuervorrichtung aufweisen, die das Druckkopf-Beschichter-Modul derart steuert, dass dieses während einer ersten Fahrt über die Bauräume (bzw. Bauboxen) beschichtet und druckt und während einer zweiten Fahrt über die Bauräume (bzw. Bauboxen), die in entgegengesetzter Richtung zu der Richtung der ersten Fahrt erfolgt, eine Leerfahrt durchführt.

Der 3D-Drucker und/oder das Druckkopf-Beschichter-Modul kann zum Beispiel eine/die Steuervorrichtung aufweisen, die das Druckkopf-Beschichter-Modul derart steuert, dass dieses während einer ersten Fahrt über die Bauräume (bzw. Bauboxen) beschichtet und während einer zweiten Fahrt über die Bauräume (bzw. Bauboxen), die in entgegengesetzter Richtung zu der Richtung der ersten Fahrt erfolgt, druckt.

Der 3D-Drucker und/oder das Druckkopf-Beschichter-Modul können zum Beispiel eine Steuervorrichtung (zum Beispiel gemeinsame Steuervorrichtung) haben, die dazu eingerichtet ist, um die oben genannten Steuerfunktionen auszuführen.

Der 3D-Drucker kann zum Beispiel eine Rückführstrecke aufweisen, die das erste Längsende der Reihe von Bauräumen (bzw. Bauboxen) mit dem zweiten Längsende der Reihe von Bauräumen (bzw. Bauboxen) verbindet, um das Druckkopf-Beschichter-Modul nach einer ersten Fahrt über die Bauräume (bzw. Bauboxen) ausgehend von dem ersten Längsende in Richtung zu dem zweiten Längsende, während der das Druckkopf-Beschichter-Modul beschichtet und druckt, zurück zu dem ersten Längsende zu führen.

Das Druckkopf-Beschichter-Modul kann zum Beispiel bidirektional ausgebildet sein, um während sowohl einer ersten Fahrt und einer zweiten Fahrt über die Bauräume (bzw. Bauboxen) jeweils zu beschichten und zu drucken. Das bidirektional ausgebildete Druckkopf-Beschichter-Modul kann zum Beispiel einen Druckkopf und zwei Beschichter aufweisen, jeweils gebildet aus einem Behälter und einer Walzenanordnung. Das bidirektional ausgebildete Druckkopf-Beschichter-Modul kann zum Beispiel zwei Druckköpfe, einen Behälter und zwei Walzenanordnungen aufweisen.

Beispielgebende, aber nicht einschränkende Ausführungsformen der Erfindung sind in den Figuren dargestellt und werden im Folgenden näher erläutert.
Figur 1 zeigt eine Perspektivansicht eines Druckkopf-Beschichter-Moduls für einen 3D-Drucker gemäß einer ersten Ausführungsform.
Figur 2 zeigt eine Perspektivansicht eines Druckkopf-Beschichter-Moduls für einen 3D-Drucker gemäß einer zweiten Ausführungsform.
Figur 3 zeigt eine Perspektivansicht eines Beschichters, der in dem Druckkopf-Beschichter-Modul gemäß der ersten und/oder zweiten Ausführungsform verwendet werden kann.
Figur 4 zeigt eine Perspektivansicht einer ersten Walze, die in dem Druckkopf-Beschichter-Modul gemäß der ersten und/oder zweiten Ausführungsform und/oder in dem in Figur 3 gezeigten Beschichter verwendet werden kann.
Figur 5 zeigt eine Frontansicht einer anderen ersten Walze, die in dem Druckkopf-Beschichter-Modul gemäß der ersten und/oder zweiten Ausführungsform und/oder in dem in Figur 3 gezeigten Beschichter verwendet werden kann.
Figur 6 zeigt eine Perspektivansicht eines 3D-Druckers gemäß einer dritten Ausführungsform, in dem das Druckkopf-Beschichter-Modul gemäß der ersten Ausführungsform verwendet wird.
Figur 7 zeigt eine Perspektivansicht eines 3D-Druckers gemäß einer vierten Ausführungsform, in dem das Druckkopf-Beschichter-Modul gemäß der zweiten Ausführungsform verwendet wird.

In der folgenden ausführlichen Beschreibung wird auf die beigefügten Figuren Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend.

Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung können Begriffe wie "verbunden", "angeschlossen" sowie "gekoppelt" verwendet werden zum Beschreiben sowohl einer direkten als auch einer indirekten Verbindung, eines direkten oder indirekten Anschlusses sowie einer direkten oder indirekten Kopplung.

In den Figuren werden identische oder ähnliche Elemente mit identischen Bezugszeichen versehen, soweit dies zweckmäßig ist.

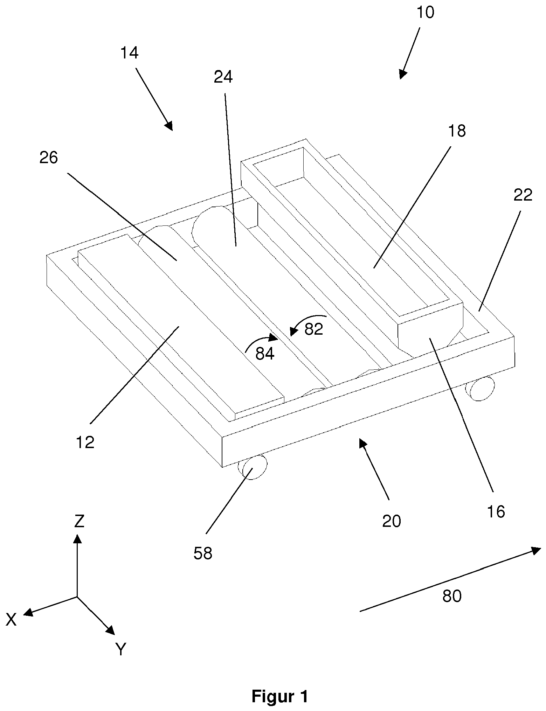

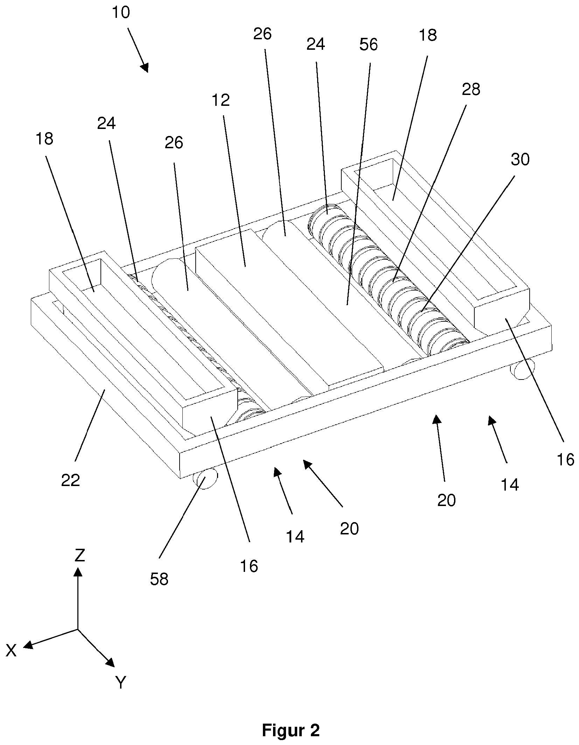

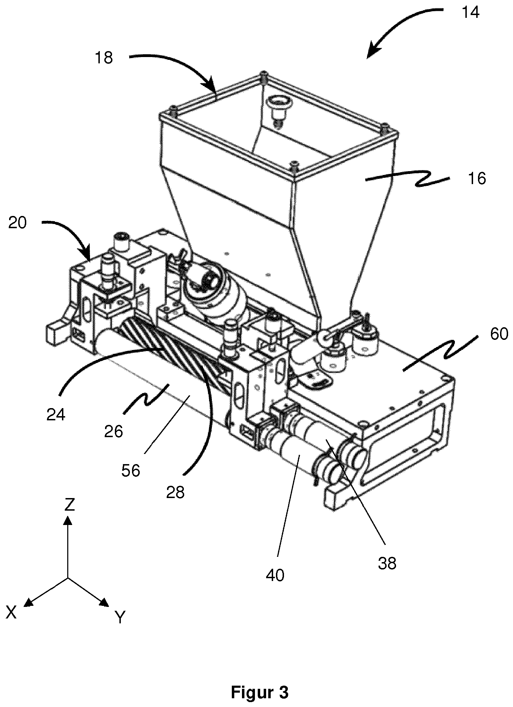

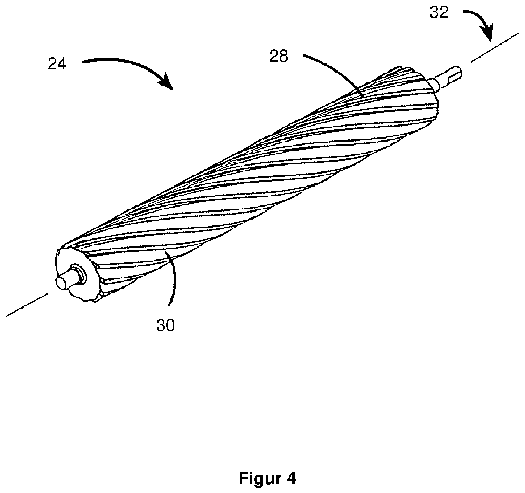

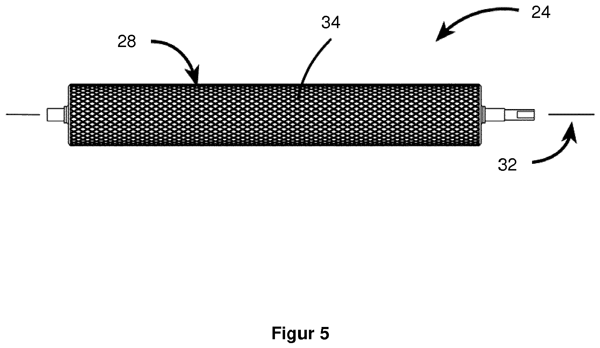

Figur 1 zeigt eine Perspektivansicht eines Druckkopf-Beschichter-Moduls 10 für einen 3D-Drucker 42 gemäß einer ersten Ausführungsform. Figur 2 zeigt eine Perspektivansicht eines Druckkopf-Beschichter-Moduls 10 für einen 3D-Drucker 42 gemäß einer zweiten Ausführungsform. Figur 3 zeigt eine Perspektivansicht eines Beschichters 14, der in dem Druckkopf-Beschichter-Modul 10 gemäß der ersten und/oder zweiten Ausführungsform verwendet werden kann. Figur 4 zeigt eine Perspektivansicht einer ersten Walze 24, die in dem Druckkopf-Beschichter-Modul 10 gemäß der ersten und/oder zweiten Ausführungsform und/oder in dem in Figur 3 gezeigten Beschichter 14 verwendet werden kann. Figur 5 zeigt eine Frontansicht einer anderen ersten Walze 24, die in dem Druckkopf-Beschichter-Modul 10 gemäß der ersten und/oder zweiten Ausführungsform und/oder in dem in Figur 3 gezeigten Beschichter 14 verwendet werden kann.

Wie in den Figuren 1 und 2 gezeigt hat das Druckkopf-Beschichter-Modul 10 für einen 3D-Drucker 42 gemäß der ersten und/oder zweiten Ausführungsform einen Druckkopf 12, einen Beschichter 14 mit einem Behälter 16 der einen inneren Hohlraum 18 zur Aufnahme von Partikelmaterial (zum Beispiel Sandpartikel, zum Beispiel Metallpartikel, zum Beispiel Kunststoffpartikel) definiert und der in einer Ausgabeöffnung mündet, aus der das Partikelmaterial ausgebbar ist, und einer Walzenanordnung 20, die zwischen dem Behälter 16 und dem Druckkopf 12 angeordnet ist, und eine gemeinsame Trägerstruktur 22, an der der Druckkopf 12, der Behälter 16 und die Walzenanordnung 20 angebracht sind, so dass der Druckkopf 12, der Behälter 16 und die Walzenanordnung 20 gemeinsam über einen Bauraum des 3D-Druckers 42 verfahrbar sind.

Die Ausgabeöffnung kann zum Beispiel an einer Unterseite des Behälters 16 angeordnet sein. Das heiß, in Figuren 1-3 kann die Ausgabeöffnung zum Beispiel entlang der z-Richtung unterhalb des inneren Hohlraums 18, an einem unteren Ende des Behälters 16 angeordnet sein.

Wie in den Figuren 1-3 gezeigt weist die Walzenanordnung 20 eine erste Walze 24 und eine zweite Walze 26 auf, wobei die erste Walze 24 zwischen dem Behälter 16 und der zweiten Walze 26 angeordnet ist.

Die erste Walze 24 kann zum Beispiel eine strukturierte Oberfläche 28 aufweisen (in Figur 1 nicht gezeigt; in Figuren 2-5 gezeigt). Die zweite Walze 26 kann zum Beispiel eine glatte Oberfläche 56 aufweisen (in Figuren 1-3 gezeigt).

Die Struktur der Oberfläche der ersten Walze 24 kann zum Beispiel mindestens eine Nut 30 aufweisen, zum Beispiel eine Mehrzahl von Nuten 30, wobei die mindestens eine Nut 30 optional geneigt sein kann gegenüber der Walzenlängsachse 32, zum Beispiel in der Form einer Helix, die sich um die Walzenlängsachse 32 windet. Eine erste Walze 24 mit einer Nut 30 in Form einer Helix ist zum Beispiel in Figur 2 gezeigt und eine erste Walze 24 mit einer Mehrzahl von Nuten 30 in Form einer Helix ist zum Beispiel in Figuren 3 und 4 gezeigt. Derartige erste Walzen 24 können zum Beispiel in der in den Figuren 1 und 2 gezeigten ersten und/oder zweiten Ausführungsform des Druckkopf-Beschichter-Moduls 10 verwendet werden.

Die Struktur der Oberfläche der ersten Walze 24 kann zum Beispiel eine Wabenstruktur 34 aufweisen, zum Beispiel eine rautenförmige Wabenstruktur 34. Eine erste Walze 24 mit einer Wabenstruktur ist zum Beispiel in Figur 5 gezeigt. Eine derartige erste Walze 24 kann zum Beispiel in der in den Figuren 1 und 2 gezeigten ersten und/oder zweiten Ausführungsform des Druckkopf-Beschichter-Moduls 10 verwendet werden.

Die Oberfläche der ersten Walze 24 kann zum Beispiel durch Abtragen von Material von der Oberfläche eines Walzenrohlings und/oder durch Aufbringen von Material auf die Oberfläche eines Walzenrohlings strukturiert werden.

Die Oberfläche der zweiten Walze 26 kann zum Beispiel geschliffen, poliert, geglättet und/oder geläppt sein/werden, zum Beispiel um die Oberfläche zu glätten, zum Beispiel um eine gewünschte Rauheit Rz (gemittelte Rautiefe) der Oberfläche zu erhalten.

Die zweite Walze 26 kann zum Beispiel gegenüber der Trägerstruktur 22 höhenverstellbar sein. Das heißt, die zweite Walze 26 kann zum Beispiel in z-Richtung (siehe Figuren 1-3) verstellbar sein.

Das Druckkopf-Beschichter-Modul 10 gemäß der ersten und/oder zweiten Ausführungsform kann zum Beispiel einen in das Druckkopf-Beschichter-Modul 10 integrierten, eigenen Trägerstruktur-Antrieb (in den Figuren nicht gezeigt) zum Bewegen der Trägerstruktur 22 bzw. des Druckkopf-Beschichter-Moduls 10 entlang eines Schienensystems 36 aufweisen. Der Trägerstruktur-Antrieb kann zum Beispiel an der Trägerstruktur 22 angeordnete Räder 58 antreiben. Alternativ oder zusätzlich zu den Rädern 58 können auch andere geeignete Abtriebsmittel verwendet werden. Die Räder 58 können zum Beispiel auf das Schienensystem 36 aufgesetzt werden, zum Beispiel so dass die Trägerstruktur 22 bzw. das Druckkopf-Beschichter-Modul 10 entlang des Schienensystem 36 bewegt werden kann.

Das Druckkopf-Beschichter-Modul 10 gemäß der ersten und/oder zweiten Ausführungsform kann zum Beispiel einen integrierten erste-Walze-Drehantrieb 38 aufweisen zum Drehbewegen der ersten Walze 24, zum Beispiel in einer Drehrichtung entgegen der Bewegungsrichtung der Trägerstruktur 22 bzw. in Gegenlaufrichtung.

Wie in Figur 1 veranschaulicht wird unter einer Drehbewegung der ersten Walze 24 in einer Drehrichtung entgegen der Bewegungsrichtung der Trägerstruktur 22 bzw. unter einer Drehbewegung der ersten Walze 24 in Gegenlaufrichtung eine Drehbewegung in Richtung des Pfeils 82 verstanden, wenn das Druckkopf-Beschichter-Modul 10 in Richtung des Pfeils 80 verfahren/bewegt wird.

Das Druckkopf-Beschichter-Modul 10 gemäß der ersten und/oder zweiten Ausführungsform kann zum Beispiel einen integrierten zweite-Walze-Drehantrieb 40 aufweisen zum Drehbewegen der zweiten Walze 26, zum Beispiel in einer Drehrichtung in Richtung der Bewegungsrichtung der Trägerstruktur 22 bzw. in Laufrichtung.

Wie in Figur 1 veranschaulicht wird unter einer Drehbewegung der zweiten Walze 26 in einer Drehrichtung in Richtung der Bewegungsrichtung der Trägerstruktur 22 bzw. unter einer Drehbewegung der zweiten Walze 26 in Laufrichtung eine Drehbewegung in Richtung des Pfeils 84 verstanden, wenn das Druckkopf-Beschichter-Modul 10 in Richtung des Pfeils 80 verfahren/bewegt wird.

Das Druckkopf-Beschichter-Modul 10 gemäß der ersten und/oder zweiten Ausführungsform kann zum Beispiel einen integrierten zweite-Walze-Hubantrieb zum Höhenverstellen der zweiten Walze 26 aufweisen (in den Figuren nicht gezeigt).

Der Druckkopf 12 und/oder der Behälter 16 und/oder die Walzenanordnung 20 können zum Beispiel in horizontaler Ebene (das heißt, in einer/der x/y-Ebene in den Figuren 1 und 2) jeweils unbeweglich/starr an der Trägerstruktur 22 angebracht sein. Der Druckkopf 12 und/oder der Behälter 16 und/oder die Walzenanordnung 20 können jedoch zum Beispiel in z-Richtung verstellbar/verschiebbar und/oder entlang einer/ihrer jeweiligen Längsachse(n) kippbar und/oder drehbar und/oder rotierbar an der Trägerstruktur 22 angebracht sein.

Wie in Figur 3 gezeigt kann der Beschichter 16 zum Beispiel eine Beschichter-Trägerstruktur 60 aufweisen, an der der Behälter 16, die Walzenanordnung 20 (bzw. die erste Walze 24 und/oder die zweite Walze 26), der erste-Walze-Drehantrieb 38 und/oder der zweite-Walze-Drehantrieb 40 angebracht sein können. Auch der zweite-Walze-Hubantrieb kann zum Beispiel an der Beschichter-Trägerstruktur 60 angebracht sein (in Figur 3 nicht gezeigt). Die Beschichter-Trägerstruktur 60 kann zum Beispiel an der Trägerstruktur 22 angebracht sein, zum Beispiel so dass der Behälter 16, die Walzenanordnung 20 (bzw. die erste Walze 24 und/oder die zweite Walze 26), der erste-Walze-Drehantrieb 38, der zweite-Walze-Drehantrieb 40 und/oder der zweite-Walze-Hubantrieb mittels der Beschichter-Trägerstruktur 60 (zum Beispiel indirekt über die Beschichter-Trägerstruktur 60) an der Trägerstruktur 22 angebracht sein können.

Das Druckkopf-Beschichter-Modul 10 gemäß der ersten und/oder zweiten Ausführungsform kann zum Beispiel eine (in den Figuren nicht gezeigte) Steuereinheit aufweisen, die dazu eingerichtet ist, den erste-Walze-Drehantrieb 38, den zweite-Walze-Drehantrieb 40 und/oder den zweite-Walze-Hubantrieb zu steuern, zum Beispiel um die oben beschriebenen Funktionen (zum Beispiel Drehen/Rotieren und/oder Höhenverstellen) zu steuern.

Wie in Figur 2 gezeigt kann das Druckkopf-Beschichter-Modul 10 gemäß der zweiten Ausführungsform zum Beispiel bidirektional ausgebildet sein (um in beide Fahrtrichtungen zu beschichten und/oder zu drucken) und einen Druckkopf 12 und zwei Beschichter 14 mit jeweils einem Behälter 16 und einer Walzenanordnung 20 aufweisen, wobei zum Beispiel der Druckkopf 12 zwischen den beiden Walzenanordnungen 20 angeordnet sein kann und der Druckkopf 12 und die beiden Walzenanordnungen 20 zwischen den beiden Behältern 16 angeordnet sein kann, wobei zum Beispiel die Walzenanordnung 20 eine erste Walze 24 und eine zweite Walze 26 aufweisen kann, und wobei zum Beispiel der Druckkopf 12 zwischen den beiden zweiten Walzen 26 angeordnet sein kann, der Druckkopf 12 und die beiden zweiten Walzen 26 zwischen den beiden ersten Walzen 24 angeordnet sein kann und der Druckkopf 12, die beiden zweiten Walzen 26 und die beiden ersten Walzen 24 zwischen den beiden Behältern 16 angeordnet sein kann. Alle Elemente/Bauteile (wie zum Beispiel Druckkopf 12, Beschichter 14, Behälter 16, Walzenanordnung 20, erste Walzen 24 und/oder zweite Walzen 26) des bidirektional ausgebildeten Druckkopf-Beschichter-Moduls 10 gemäß der zweiten Ausführungsform können zum Beispiel wie oben beschrieben ausgestaltet sein.

Eine alternative (in den Figuren nicht gezeigte) Ausführungsform des Druckkopf-Beschichter-Moduls 10, das bidirektional ausgebildet sein kann, kann zum Beispiel zwei Druckköpfe 12, zwei Walzenanordnungen 20 und einen Behälter 16 aufweisen, wobei zum Beispiel der Behälter 16 zwischen den beiden Walzenanordnungen 20 angeordnet sein kann und der Behälter 16 und die beiden Walzenanordnungen 20 zwischen den beiden Druckköpfen 12 angeordnet sein kann, und wobei zum Beispiel Druckkopf 12, Behälter 16 und/oder Walzenanordnung 20 wie oben beschrieben ausgestaltet sein kann. Eine derartige Anordnung könnte man zum Beispiel erhalten, indem die in Figur 1 gezeigte Anordnung von Druckkopf 12, Walzenanordnung 20 und Behälter 16 an einer/der Längsachse des Behälters 16 gespiegelt wird.

Die oben beschriebenen Elemente/Bauteile können für alle Ausführungsformen des Druckkopf-Beschichter-Moduls 10 verwendet werden.

Das Druckkopf-Beschichter-Modul 10 kann zum Beispiel verwendet werden (a) zum schichtweisen Auftragen und selektiven Bedrucken von Schichten aus Sand, zum Beispiel Gießereisand, und/oder (b) zum 3D-Drucken von Gießformen und/oder Gießkernen, und/oder (c) zum kollektiven schichtweisen Auftragen und selektiven Bedrucken von Partikelmaterial in mehreren in Reihe angeordneten Baufeldern 46, zum Beispiel gebildet durch eine jeweilige Bauplattform, welche zum Beispiel in einer jeweiligen Baubox 48 aufgenommen ist.

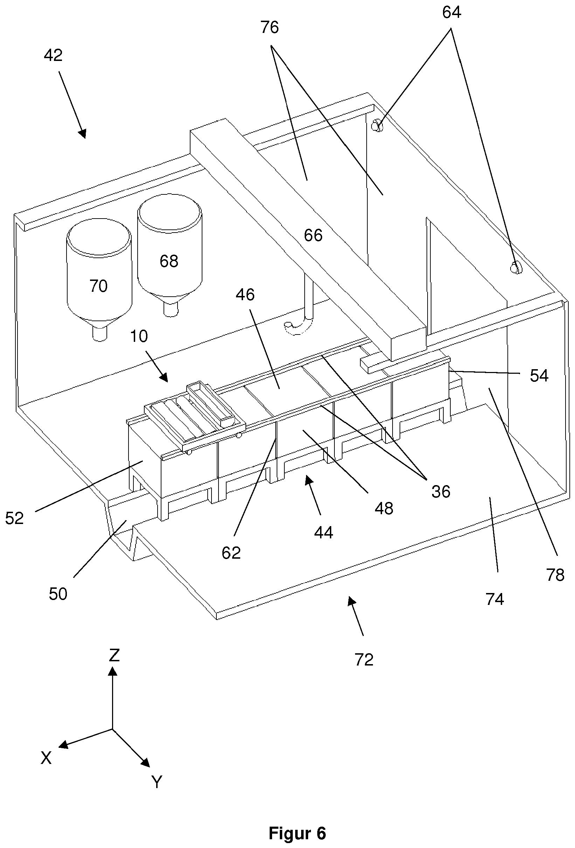

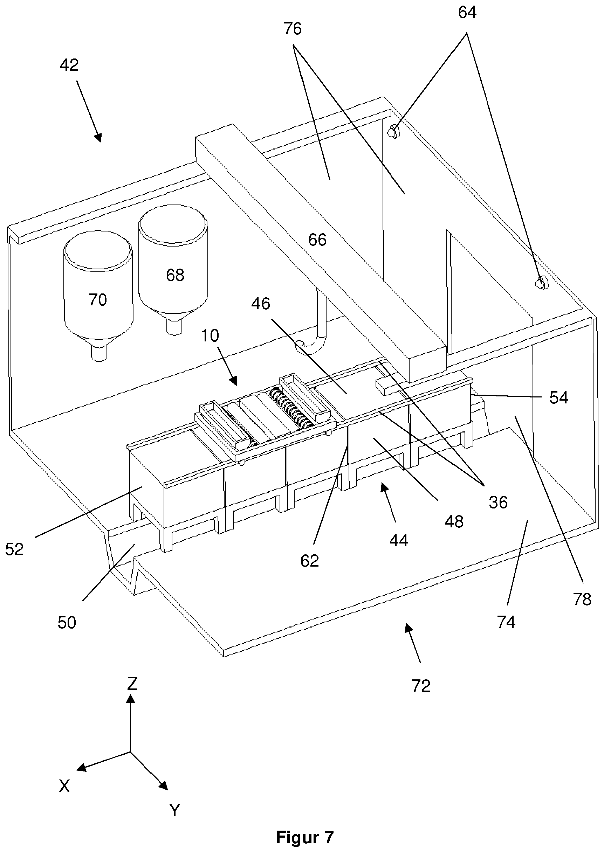

Figur 6 zeigt eine Perspektivansicht eines 3D-Druckers 42 gemäß einer dritten Ausführungsform, in dem das Druckkopf-Beschichter-Modul 10 gemäß der ersten Ausführungsform verwendet wird. Figur 7 zeigt eine Perspektivansicht eines 3D-Druckers 42 gemäß einer vierten Ausführungsform, in dem das Druckkopf-Beschichter-Modul 10 gemäß der zweiten Ausführungsform verwendet wird.

Wie in den Figuren 6 und 7 gezeigt hat ein 3D-Drucker 42 gemäß der dritten und/oder vierten Ausführungsform ein Druckkopf-Beschichter-Modul 10 für einen 3D-Drucker, eine Mehrzahl von Bauräumen 44 die hintereinander in Reihe angeordnet sind, und ein Schienensystem 36, entlang dem das Druckkopf-Beschichter-Modul 10 über die Mehrzahl von Bauräumen 44 hinweg verfahrbar ist. Das Druckkopf-Beschichter-Modul 10 kann zum Beispiel eines der oben beschriebenen Druckkopf-Beschichter-Module 10 sein, zum Beispiel ein Druckkopf-Beschichter-Modul 10 gemäß der ersten Ausführungsform (wie in Figur 6 gezeigt), zum Beispiel ein Druckkopf-Beschichter-Modul 10 gemäß der zweiten Ausführungsform (wie in Figur 7 gezeigt).

Ein (jeweiliger) Bauraum 44 kann zum Beispiel durch eine Baubox 48 gebildet sein. Eine (jeweilige) Baubox 48 kann zum Beispiel eine höhenverstellbare Bauplattform (in den Figuren nicht gezeigt) und Seitenwände aufweisen. Die (jeweiligen) Bauplattformen der (jeweiligen) (zum Beispiel benachbarten) Bauboxen 48 können zum Beispiel unabhängig voneinander steuerbar (zum Beispiel höhenverstellbar) sein, zum Beispiel mittels einer/der Steuervorrichtung. Die Bauräume 44 bzw. die Bauboxen 48 können zum Beispiel derart benachbart zueinander angeordnet sein, dass zwei benachbarte Bauboxen 48 eine gemeinsame Seitenwand 62 haben. Die gemeinsame Seitenwand 62 kann zum Beispiel die beiden (jeweiligen) benachbarten Bauräume 44 voneinander trennen. Die gemeinsame Seitenwand 62 kann zum Beispiel entfernbar/herausnehmbar sein, so dass zwei benachbarte Bauräume 44 zu einem größeren Bauraum verbindbar sind. In diesem Fall kann eine/die Steuervorrichtung zum Beispiel eingerichtet sein, um die Bauplattformen der verbundenen Bauräume 44 synchron zu steuern, zum Beispiel so dass die Bauplattformen immer die gleiche Höhe (in z-Richtung in Figuren 6 und 7) haben. Es können zum Beispiel auch mehr als zwei benachbarte Bauräume 44 zu einem gemeinsamen Bauraum verbindbar sein.

Die Bauräume 44 können zum Beispiel ein jeweils längliches Baufeld 46 definieren und derart hintereinander in Reihe angeordnet sein, dass die Baufelder 46 mit ihren Längsachsen hintereinander bzw. in Verlängerung zueinander ausgerichtet sind (siehe Figuren 6 und 7). Die Längsachsen der Baufelder 46 können zum Beispiel deckungsgleich sein.

Die Bauräume 44 bzw. die Baufelder 46 können in Draufsicht zum Beispiel zwei lange Seiten und zwei kurze Seiten haben und können zum Beispiel entlang einer jeweiligen kurzen Seite benachbart zueinander angeordnet sein (siehe Figuren 6 und 7).

Das Schienensystem 36 kann zum Beispiel ein oder mehrere Schienen aufweisen. In Figuren 6 und 7 ist zum Beispiel ein Schienensystem mit zwei Schienen gezeigt. Die Längsachse(n) der ein oder mehreren Schienen kann sich zum Beispiel (im Wesentlichen) parallel zu den langen Seiten der Bauräume 44 und/oder (im Wesentlichen) parallel zu den Längsachsen der Baufelder 46 erstrecken.

Das Druckkopf-Beschichter-Modul 10 kann zum Beispiel entlang des Schienensystems 36 (zum Beispiel entlang der ein oder mehreren Schienen) in eine Richtung verfahrbar sein, die (im Wesentlichen) parallel ist zu den langen Seiten der Bauräume 44 und/oder (im Wesentlichen) parallel ist zu den Längsachsen der Baufelder 46 (siehe Figuren 6 und 7).

Der 3D-Drucker gemäß der dritten und/oder vierten Ausführungsform kann zum Beispiel eine Kanalstruktur 50 aufweisen, die unterhalb der Mehrzahl von Bauboxen 48 verläuft, wobei die Bauboxen 48 zum Beispiel eingerichtet sein können, um loses Partikelmaterial nach unten hin (in z-Richtung in Figuren 6 und 7) in die Kanalstruktur 50 abzuführen. Die Kanalstruktur 50 kann zum Beispiel optional geneigt sein und/oder eine Partikelmaterialbeförderungsvorrichtung (zum Beispiel ein Förderband) aufweisen, zum Beispiel um das lose Partikelmaterial abzuführen.

Der 3D-Drucker 42 gemäß der dritten und/oder vierten Ausführungsform kann zum Beispiel eine erste und eine zweite Wendevorrichtung (in den Figuren nicht gezeigt) aufweisen, die an einem/dem ersten Längsende 52 bzw. an einem/dem zweiten Längsende 54 der Reihe von Bauräumen 44 bzw. Bauboxen 48 angeordnet ist und eingerichtet ist, um das Druckkopf-Beschichter-Modul 10 zu wenden, so dass das Druckkopf-Beschichter-Modul 10 nach einer ersten Fahrt über die Bauräume 44 bzw. Bauboxen 48 für eine zweite Fahrt über die Bauräume 44 bzw. Bauboxen 48 in umgekehrter Richtung bereitsteht. Eine solche Wendevorrichtung ist besonders geeignet für den 3D-Drucker 42 gemäß der dritten Ausführungsform, in dem ein Druckkopf-Beschichter-Modul 10 gemäß der ersten Ausführungsform verwendet wird (wie in Figur 6 gezeigt).

Der 3D-Drucker 42 gemäß der dritten und/oder vierten Ausführungsform kann zum Beispiel eine Steuervorrichtung (in den Figuren nicht gezeigt) aufweisen, die das Druckkopf-Beschichter-Modul 10 derart steuert, dass dieses während einer ersten Fahrt über die Bauräume 44 bzw. Bauboxen 48 beschichtet und druckt und während einer zweiten Fahrt über die Bauräume 44 bzw. Bauboxen 48, die in entgegengesetzter Richtung zu der Richtung der ersten Fahrt erfolgt, eine Leerfahrt durchführt, oder dass dieses während einer ersten Fahrt über die Bauräume 44 bzw. Bauboxen 48 beschichtet und während einer zweiten Fahrt über die Bauräume 44 bzw. Bauboxen 48, die in entgegengesetzter Richtung zu der Richtung der ersten Fahrt erfolgt, druckt. Eine derart eingerichtete Steuervorrichtung ist besonders geeignet für den 3D-Drucker 42 gemäß der dritten Ausführungsform, in dem ein Druckkopf-Beschichter-Modul 10 gemäß der ersten Ausführungsform verwendet wird (wie in Figur 6 gezeigt).

Der 3D-Drucker 42 gemäß der dritten und/oder vierten Ausführungsform kann zum Beispiel eine Rückführstrecke (in den Figuren nicht gezeigt) aufweisen, die ein/das erste Längsende 52 der Reihe von Bauräumen 44 bzw. Bauboxen 48 mit einem/dem zweiten Längsende 54 der Reihe von Bauräumen 44 bzw. Bauboxen 48 verbindet, um das Druckkopf-Beschichter-Modul 10 nach einer ersten Fahrt über die Bauräume 44 bzw. Bauboxen 48 ausgehend von dem ersten Längsende in Richtung zu dem zweiten Längsende 54, während der das Druckkopf-Beschichter-Modul 10 beschichtet und druckt, zurück zu dem ersten Längsende 52 zu führen. Eine derart eingerichtete Steuervorrichtung ist besonders geeignet für den 3D-Drucker 42 gemäß der dritten Ausführungsform, in dem ein Druckkopf-Beschichter-Modul 10 gemäß der ersten Ausführungsform verwendet wird (wie in Figur 6 gezeigt).

Der 3D-Drucker 42 gemäß der vierten Ausführungsform kann zum Beispiel ein/das Druckkopf-Beschichter-Modul 10 aufweisen, das bidirektional ausgebildet ist, um während sowohl einer ersten Fahrt und einer zweiten Fahrt jeweils zu beschichten und zu drucken (wie in Figur 7 gezeigt). Das Druckkopf-Beschichter-Modul 10, das bidirektional ausgebildet ist kann zum Beispiel wie oben beschrieben ausgebildet sein. Das Druckkopf-Beschichter-Modul 10, das bidirektional ausgebildet ist kann zum Beispiel das Druckkopf-Beschichter-Modul 10 gemäß der zweiten Ausführungsform sein. Das Druckkopf-Beschichter-Modul 10, das bidirektional ausgebildet ist, kann zum Beispiel einen Druckkopf 12 und zwei Beschichter 14 mit jeweils einem Behälter 16 und einer Walzenanordnung 20 aufweisen. Das Druckkopf-Beschichter-Modul 10, das bidirektional ausgebildet ist, kann zum Beispiel zwei Druckköpfe 12, einen Behälter 16 und zwei Walzenanordnungen 20 aufweisen.

Der 3D-Drucker 42 gemäß der dritten und/oder vierten Ausführungsform kann zum Beispiel einen Vorratsbehälter 68 für ein/das Behandlungsmittel (zum Beispiel Bindemittel, zum Beispiel Binder) aufweisen. Der Vorratsbehälter 68 kann zum Beispiel eingerichtet sein, um den Druckkopf 12 (zum Beispiel automatisiert, zum Beispiel gesteuert durch eine/die Steuervorrichtung) mit Behandlungsmittel zu befüllen, zum Beispiel wenn der Füllstand an Behandlungsmittel im Druckkopf 12 einen (vor)bestimmten Grenzwert unterschreitet.

Der 3D-Drucker 42 gemäß der dritten und/oder vierten Ausführungsform kann zum Beispiel einen Vorratsbehälter 70 für ein/das Partikelmaterial (zum Beispiel Sand, zum Beispiel Metallpulver) aufweisen. Der Vorratsbehälter 70 kann zum Beispiel eingerichtet sein, um den Behälter 16 (zum Beispiel automatisiert, zum Beispiel gesteuert durch eine/die Steuervorrichtung) mit Partikelmaterial zu befüllen, zum Beispiel wenn der Füllstand an Partikelmaterial im Behälter 16 einen (vor)bestimmten Grenzwert unterschreitet.

Der 3D-Drucker 42 gemäß der dritten und/oder vierten Ausführungsform kann zum Beispiel in einem Raum 72 angeordnet sein. Der Raum 72 kann zum Beispiel einen Boden 74 und Wände 76 haben. Der Raum 72 kann zum Beispiel eine Öffnung 78 (zum Beispiel ein Tor) haben, durch die der Raum betreten werden kann (zum Beispiel von einem Maschinenführer, zum Beispiel um Wartungsarbeiten an dem Druckkopf-Beschichter-Modul 10 und/oder dem 3D-Drucker 42 durchzuführen) und/oder durch die Partikelmaterial (zum Beispiel mittels der Kanalstruktur 50) aus dem Raum 72 abgeführt werden kann. In dem Raum 72 kann ein Kran 66 vorgesehen sein, zum Beispiel um das Druckkopf-Beschichter-Modul 10 auf dem Schienensystem 36 zu platzieren und/oder davon zu entfernen, und/oder um die gemeinsamen Seitenwände 62 zu entfernen (zum Beispiel herauszuheben). In dem Raum 72 können zum Beispiel Kameras 64 angeordnet sein, zum Beispiel an den Wänden 76 des Raums 72 und/oder an den (in den Figuren nicht gezeigten) Decken des Raums 72. Mit den Kameras 64 kann zum Beispiel ein Druckvorgang des in dem Raum 72 angeordneten 3D-Druckers 42 überwacht bzw. kontrolliert werden.

## Patentansprüche

1. Ein Druckkopf-Beschichter-Modul (10) für einen 3D-Drucker, aufweisend:
einen Druckkopf (12),
einen Beschichter (14) mit
einem Behälter (16), der einen inneren Hohlraum (18) zur Aufnahme von Partikelmaterial definiert und der in einer Ausgabeöffnung mündet, aus der das Partikelmaterial ausgebbar ist, und
einer Walzenanordnung (20), die zwischen dem Behälter (16) und dem Druckkopf (12) angeordnet ist, und
eine gemeinsame Trägerstruktur (22), an der der Druckkopf (12), der Behälter (16) und die Walzenanordnung (20) angebracht sind, so dass der Druckkopf (12), der Behälter (16) und die Walzenanordnung (20) gemeinsam über einen Bauraum des 3D-Druckers verfahrbar sind, wobei
die Walzenanordnung (20) eine erste Walze (24) und eine zweite Walze (26) aufweist, die erste Walze (24) zwischen dem Behälter (16) und der zweiten Walze (26) angeordnet ist, **dadurch gekennzeichnet, dass**
die zweite Walze (26) zwischen der ersten Walze (24) und dem Druckkopf (12) angeordnet ist.

2. Das Druckkopf-Beschichter-Modul (10) für einen 3D-Drucker nach Anspruch 1, wobei die erste Walze (24) eine strukturierte Oberfläche (28) aufweist und/oder wobei die zweite Walze (26) eine glatte Oberfläche (56) aufweist.

3. Das Druckkopf-Beschichter-Modul (10) für einen 3D-Drucker nach Anspruch 2,
wobei die Struktur der Oberfläche der ersten Walze (24) mindestens eine Nut (30) aufweist, zum Beispiel eine Mehrzahl von Nuten (30),
wobei die mindestens eine Nut (30) optional geneigt ist gegenüber der Walzenlängsachse (32), zum Beispiel in der Form einer Helix, die sich um die Walzenlängsachse (32) windet, oder
wobei die Struktur der Oberfläche der ersten Walze (24) eine Wabenstruktur (34) aufweist, zum Beispiel eine rautenförmige Wabenstruktur (34).

4. Das Druckkopf-Beschichter-Modul (10) für einen 3D-Drucker nach einem der Ansprüche 1 bis 3,
wobei die zweite Walze (26) gegenüber der Trägerstruktur (22) höhenverstellbar ist.

5. Das Druckkopf-Beschichter-Modul (10) für einen 3D-Drucker nach einem der vorangehenden Ansprüche, ferner aufweisend:
einen in das Druckkopf-Beschichter-Modul (10) integrierten, eigenen Trägerstruktur-Antrieb zum Bewegen der Trägerstruktur (22) entlang eines Schienensystems (36).

6. Das Druckkopf-Beschichter-Modul (10) für einen 3D-Drucker nach einem der Ansprüche 1 bis 5, ferner aufweisend:
einen integrierten erste-Walze-Drehantrieb (38) zum Drehbewegen der ersten Walze (24), optional in einer Drehrichtung entgegen der Bewegungsrichtung der Trägerstruktur (22), und/oder
einen integrierten zweite-Walze-Drehantrieb (40) zum Drehbewegen der zweiten Walze (26), optional in einer Drehrichtung in Richtung der Bewegungsrichtung der Trägerstruktur (22), und/oder
einen integrierten zweite-Walze-Hubantrieb zum Höhenverstellen der zweiten Walze (26).

7. Das Druckkopf-Beschichter-Modul (10) für einen 3D-Drucker nach einem der vorangehenden Ansprüche,
wobei Druckkopf (12) und/oder Behälter (16) und/oder Walzenanordnung (20) in horizontaler Ebene jeweils unbeweglich an der Trägerstruktur (22) angebracht sind.

8. Verwendung des Druckkopf-Beschichter-Moduls (10) nach einem der vorangehenden Ansprüche
zum schichtweisen Auftragen und selektiven Bedrucken von Schichten aus Sand, zum Beispiel Gießereisand, und/oder
zum 3D-Drucken von Gießformen und/oder Gießkernen, und/oder
zum kollektiven schichtweisen Auftragen und selektiven Bedrucken von Partikelmaterial in mehreren in Reihe angeordneten Baufeldern (46), zum Beispiel gebildet durch eine jeweilige Bauplattform, welche zum Beispiel in einer jeweiligen Baubox (48) aufgenommen ist.

9. 3D-Drucker (42), aufweisend:
ein Druckkopf-Beschichter-Modul (10) für einen 3D-Drucker nach einem der Ansprüche 1-8,
eine Mehrzahl von Bauräumen (44), die hintereinander in Reihe angeordnet sind, und
ein Schienensystem (36), entlang dem das Druckkopf-Beschichter-Modul (10) über die Mehrzahl von Bauräumen (44) hinweg verfahrbar ist.

10. 3D-Drucker (42) nach Anspruch 9,
wobei ein jeweiliger Bauraum (44) durch eine Baubox (48) gebildet ist,
ferner aufweisend eine Kanalstruktur (50), die unterhalb der Mehrzahl von Bauboxen (48) verläuft,
wobei die Bauboxen (48) eingerichtet sind, um loses Partikelmaterial nach unten hin in die Kanalstruktur (50) abzuführen,
und wobei die Kanalstruktur (50) optional geneigt ist und/oder eine Partikelmaterialbeförderungsvorrichtung aufweist.

11. 3D-Drucker (42) nach Anspruch 9 oder 10,
ferner aufweisend eine erste und eine zweite Wendevorrichtung, die an dem ersten bzw. dem zweiten Längsende der Reihe von Bauräumen (44) angeordnet ist und eingerichtet ist, um das Druckkopf-Beschichter-Modul (10) zu wenden, so dass das Druckkopf-Beschichter-Modul (10) nach einer ersten Fahrt über die Bauräume (44) für eine zweite Fahrt über die Bauräume (44) in umgekehrter Richtung bereitsteht, oder
ferner aufweisend eine Steuervorrichtung, die das Druckkopf-Beschichter-Modul (10) derart steuert, dass dieses während einer ersten Fahrt über die Bauräume (44) beschichtet und druckt und während einer zweiten Fahrt über die Bauräume (44), die in entgegengesetzter Richtung zu der Richtung der ersten Fahrt erfolgt, eine Leerfahrt durchführt, oder dass dieses während einer ersten Fahrt über die Bauräume (44) beschichtet und während einer zweiten Fahrt über die Bauräume (44), die in entgegengesetzter Richtung zu der Richtung der ersten Fahrt erfolgt, druckt, oder
ferner aufweisend eine Rückführstrecke, die das erste Längsende (52) der Reihe von Bauräumen (44) mit dem zweiten Längsende (54) der Reihe von Bauräumen (44) verbindet, um das Druckkopf-Beschichter-Modul (10) nach einer ersten Fahrt über die Bauräume (44) ausgehend von dem ersten Längsende (52) in Richtung zu dem zweiten Längsende (54), während der das Druckkopf-Beschichter-Modul (10) beschichtet und druckt, zurück zu dem ersten Längsende (52) zu führen, oder
wobei das Druckkopf-Beschichter-Modul (10) bidirektional ausgebildet ist, um während sowohl einer ersten Fahrt und einer zweiten Fahrt über die Bauräume (44) jeweils zu beschichten und zu drucken, mit
einem Druckkopf (12) und zwei Beschichtern (14), jeweils aus einem Behälter (16) und einer Walzenanordnung (20), oder
mit zwei Druckköpfen (12), einem Behälter (16) und zwei Walzenanordnungen (20).

12. 3D-Drucker (42) nach einem der Ansprüche 9 bis 11, wobei
die Bauräume (44) ein jeweils längliches Baufeld (46) definieren und derart hintereinander in Reihe angeordnet sind, dass die Baufelder (46) mit ihren Längsachsen hintereinander bzw. in Verlängerung zueinander ausgerichtet sind.

## Claims

1. A print head coater module (10) for a 3D printer, comprising:
a print head (12),
a coater (14) including
a container (16) defining an inner cavity (18) for receiving particulate material and opening into an output opening from which the particulate material can be output, and
a roller assembly (20) arranged between the container (16) and the print head (12), and
a common support structure (22) to which the print head (12), the container (16) and the roller assembly (20) are attached, so that the print head (12), the container (16) and the roller assembly (20) are movable together over a construction space of the 3D printer,
wherein the roller assembly (20) comprises a first roller (24) and a second roller (26), the first roller (24) is arranged between the container (16) and the second roller (26), **characterized in that**
the second roller (26) is arranged between the first roller (24) and the print head (12).

2. The print head coater module (10) for a 3D printer according to claim 1,
wherein the first roller (24) comprises a structured surface (28) and/or
wherein the second roller (26) comprises a smooth surface (56).

3. The print head coater module (10) for a 3D printer according to claim 2,
wherein the structure of the surface of the first roller (24) comprises at least one groove (30), for example a plurality of grooves (30),
wherein the at least one groove (30) is optionally inclined relative to the roller longitudinal axis (32), for example in the form of a helix winding around the roller longitudinal axis (32), or
wherein the structure of the surface of the first roller (24) has a honeycomb structure (34), for example a rhombusshaped honeycomb structure (34).

4. The print head coater module (10) for a 3D printer according to any one of claims 1 to 3,
wherein the second roller (26) is height-adjustable relative to the support structure (22).

5. The print head coater module (10) for a 3D printer according to any one of the preceding claims, further comprising:
a support structure drive integrated in the print head coater module (10) for moving the support structure (22) along a rail system (36).

6. The print head coater module (10) for a 3D printer according to any one of claims 1 to 5, further comprising:
an integrated first roller rotary drive (38) for rotational movement of the first roller (24), optionally in a direction of rotation opposite to the direction of movement of the support structure (22), and/or
an integrated second roller rotary drive (40) for rotational movement of the second roller (26), optionally in a direction of rotation in the direction of the direction of movement of the support structure (22), and/or
an integrated second roller lift drive for height adjustment of the second roller (26).

7. The print head coater module (10) for a 3D printer according to any one of the preceding claims,
wherein the print head (12) and/or the container (16) and/or the roller assembly (20) are each immovably attached to the support structure (22) in a horizontal plane.

8. Use of the print head coater module (10) according to any one of the preceding claims,
for applying in layers and selectively printing of layers of sand, for example foundry sand, and/or
for 3D printing of casting molds and/or foundry cores, and/or
for collectively applying in layers and selectively printing of particulate material in several construction fields (46) arranged in series, for example formed by a respective construction platform, which is for example received in a respective construction box (48).

9. 3D printer (42), comprising:
a print head coater module (10) for a 3D printer according to any one of claims 1-8,
a plurality of construction spaces (44) arranged one after the other in series, and
a rail system (36) along which the print head coater module (10) is movable across the plurality of construction spaces (44).

10. 3D printer (42) according to claim 9,
wherein a respective construction space (44) is formed by a construction box (48),
further comprising a channel structure (50) extending below the plurality of construction boxes (48),
wherein the construction boxes (48) are configured to discharge loose particulate material in a downward direction into the channel structure (50),
and wherein the channel structure (50) is optionally inclined and/or comprises a particulate material conveyor device.

11. 3D printer (42) according to claim 9 or 10,
further comprising first and second turning devices arranged at the first and second longitudinal ends of the series of construction spaces (44), respectively, and configured to turn the print head coater module (10) so that after a first journey over the construction spaces (44) the print head coater module (10) is ready for a second journey over the construction spaces (44) in the reverse direction, or
further comprising a control device which controls the print head coater module (10) in a way to coat and print during a first journey over the construction spaces (44) and perform an idle run during a second journey over the construction spaces (44) which is in a direction opposite to the direction of the first journey, or to coat during a first journey over the construction spaces (44) and to print during a second journey over the construction spaces (44) which is in a direction opposite to the direction of the first journey, or
further comprising a return path connecting the first longitudinal end (52) of the series of construction spaces (44) to the second longitudinal end (54) of the series of construction spaces (44) to return the print head coater module (10) to the first longitudinal end (52) after a first journey over the construction spaces (44) starting from the first longitudinal end (52) towards the second longitudinal end (54), during which the print head coater module (10) is coating and printing, or
wherein the print head coater module (10) is configured to be bidirectional to coat and print both during a first journey and a second journey over the construction spaces (44), with
a print head (12) and two coaters (14), each comprising a container (16) and a roller assembly (20), or
with two print heads (12), a container (16) and two roller assemblies (20).

12. 3D printer (42) according to any one of claims 9 to 11, wherein
the construction spaces (44) define a respectively elongate construction field (46) and are arranged one after the other in series in such a way that the construction fields (46) are aligned with their longitudinal axes one after the other and in extension with respect to one another, respectively.

## Revendications

1. Un module de revêtement/tête d'impression (10) pour une imprimante 3D, comprenant :
une tête d'impression (12),
un dispositif de revêtement (14) comprenant
un récipient (16) définissant une cavité intérieure (18) destinée à recevoir de la matière particulaire et débouchant sur une ouverture de sortie par laquelle la matière particulaire peut être sortie, et
un ensemble de rouleaux (20) disposé entre le récipient (16) et la tête d'impression (12), et
une structure de support commune (22) à laquelle la tête d'impression (12), le récipient (16) et l'ensemble de rouleaux (20) sont fixés, de sorte que la tête d'impression (12), le récipient (16) et l'ensemble de rouleaux (20) peuvent être déplacés ensemble sur un espace de construction de l'imprimante 3D,
dans lequel l'ensemble de rouleaux (20) comprend un premier rouleau (24) et un deuxième rouleau (26), le premier rouleau (24) est disposé entre le récipient (16) et le deuxième rouleau (26), **caractérisé en ce que**
le deuxième rouleau (26) est disposé entre le premier rouleau (24) et la tête d'impression (12).

2. Le module de revêtement/tête d'impression (10) pour une imprimante 3D selon la revendication 1,
dans lequel le premier rouleau (24) comprend une surface structurée (28) et/ou
où le deuxième rouleau (26) comprend une surface lisse (56).

3. Le module de revêtement/tête d'impression (10) pour une imprimante 3D selon la revendication 2,
dans lequel la structure de la surface du premier rouleau (24) comprend au moins une rainure (30), par exemple une pluralité de rainures (30),
dans lequel ladite au moins une rainure (30) est éventuellement inclinée par rapport à l'axe longitudinal du rouleau (32), par exemple sous la forme d'une hélice enroulée autour de l'axe longitudinal de rouleau (32), ou
dans lequel la structure de la surface du premier rouleau (24) présente une structure en nid d'abeille (34), par exemple une structure en nid d'abeille en forme de losange (34).

4. Le module de revêtement/tête d'impression (10) pour une imprimante 3D selon l'une quelconque des revendications 1 à 3,
dans lequel le deuxième rouleau (26) est réglable en hauteur par rapport à la structure de support (22).

5. Le module de revêtement/tête d'impression (10) pour une imprimante 3D selon l'une quelconque des revendications précédentes, comprenant en outre :
un entraînement de structure de support intégré dans le module de revêtement/tête d'impression (10) pour déplacer la structure de support (22) le long d'un système de rails (36) .

6. Le module de revêtement/tête d'impression (10) pour une imprimante 3D selon l'une quelconque des revendications 1 à 5, comprenant en outre :
un entraînement rotatif intégré de premier rouleau (38) pour un mouvement de rotation du premier rouleau (24), éventuellement dans un sens de rotation opposé à la direction de déplacement de la structure de support (22), et/ou
un entraînement rotatif intégré de deuxième rouleau (40) pour un mouvement de rotation du deuxième rouleau (26), éventuellement dans un sens de rotation dans le sens de la direction de déplacement de la structure de support (22), et/ou
un entraînement de levage intégré de deuxième rouleau pour le réglage de la hauteur du deuxième rouleau (26) .

7. Le module de revêtement/tête d'impression (10) pour une imprimante 3D selon l'une quelconque des revendications précédentes,
dans lequel la tête d'impression (12) et/ou le récipient (16) et/ou l'ensemble de rouleaux (20) sont chacun fixés de manière immobile à la structure de support (22) dans un plan horizontal.

8. Utilisation du module de revêtement/tête d'impression (10) selon l'une quelconque des revendications précédentes,
pour l'application en couches et l'impression sélective de couches de sable, par exemple de sable de fonderie, et/ou
pour l'impression 3D de moules de fonderie et/ou de noyaux de fonderie, et/ou
pour l'application collective en couches et l'impression sélective de matériaux particulaires dans plusieurs champs de construction (46) disposés en série, par exemple formés par une plate-forme de construction respective, qui est par exemple reçue dans une boîte de construction respective (48).

9. Imprimante 3D (42), comprenant :
un module de revêtement/tête d'impression (10) pour une imprimante 3D selon l'une quelconque des revendications 1-8,
une pluralité d'espaces de construction (44) disposés les uns à la suite des autres en série, et
un système de rails (36) le long duquel le module de revêtement/tête d'impression (10) est déplaçable à travers la pluralité d'espaces de construction (44).

10. Imprimante 3D (42) selon la revendication 9,
dans laquelle un espace de construction respectif (44) est formé par une boîte de construction (48),
comprenant en outre une structure de canal (50) s'étendant sous la pluralité de boîtes de construction (48),
où les boîtes de construction (48) sont configurées pour décharger de la matière particulaire en vrac vers le bas dans la structure de canal (50),
et où la structure de canal (50) est éventuellement inclinée et/ou comprend un dispositif de transport de matière particulaire.

11. Imprimante 3D (42) selon la revendication 9 ou 10,
comprenant en outre des premier et deuxième dispositifs de retournement disposés respectivement aux première et deuxième extrémités longitudinales de la série d'espaces de construction (44) et configurés pour faire tourner le module de revêtement/tête d'impression (10) de sorte qu'après un premier passage au-travers des espaces de construction (44), le module de revêtement/tête d'impression (10) est prêt pour un deuxième passage dans le sens inverse au-travers des espaces de construction (44), ou
comprenant en outre un dispositif de commande qui commande le module de revêtement/tête d'impression (10) de manière à revêtir et à imprimer pendant un premier passage au travers des espaces de construction (44) et à effectuer un passage à vide pendant un deuxième passage au travers des espaces de construction (44) qui est dans une direction opposée à la direction du premier passage, ou à revêtir pendant un premier passage au travers des espaces de construction (44) et à imprimer pendant un deuxième passage au travers des espaces de construction (44) qui est dans une direction opposée à la direction du premier passage, ou
comprenant en outre une voie de retour reliant la première extrémité longitudinale (52) de la série d'espaces de construction (44) à la deuxième extrémité longitudinale (54) de la série d'espaces de construction (44) pour ramener le module de revêtement/tête d'impression (10) à la première extrémité longitudinale (52) après un premier passage au travers des espaces de construction (44) en partant de la première extrémité longitudinale (52) vers la deuxième extrémité longitudinale (54), pendant lequel le module de revêtement/tête d'impression (10) effectue le revêtement et l'impression, ou
dans lequel le module de revêtement/tête d'impression (10) est configuré pour être bidirectionnel afin de revêtir et imprimer à la fois pendant un premier passage et un deuxième passage au travers des espaces de construction (44), avec
une tête d'impression (12) et deux dispositifs de revêtement (14), comprenant chacun un récipient (16) et un ensemble de rouleaux (20), ou
avec deux têtes d'impression (12), un récipient (16) et deux ensembles de rouleaux (20).

12. Imprimante 3D (42) selon l'une quelconque des revendications 9 à 11, dans laquelle
les espaces de construction (44) définissent respectivement un champ de construction (46) allongé et sont disposés en série l'un après l'autre de telle sorte que les champs de construction (46) sont alignés avec leurs axes longitudinaux respectivement l'un après l'autre et en extension l'un par rapport à l'autre.
